# EUROPEAN PATENT APPLICATION

(11) **EP 1 727 369 A1**
(43) Date of publication of application: **29.11.2006**
(21) Application number: 05011076.6
(22) Date of filing: 23.05.2005
(51) Int. Cl.: H04N 7/26, G06T 5/00

(54) **Adaptive post-filtering**

(71) Applicant: TELEFONAKTIEBOLAGET LM ERICSSON (publ), 164 83 Stockholm (SE)
(72) Inventor: Rossholm, Andreas, 211 42 Malmö (SE); Svensson, Jan, 264 70 Klippan (SE); Kruszynski, Martin, 211 59 Malmö (SE)
(74) Representative: Asketorp, Göran

(57) **Abstract**

A method and a device for optimizing a post-filtering process for post-filtering a decoded image of a sequence of images. The method comprises at least a portion of a difference between a time period available for processing an image and a time period being used for processing said image. A complexity level of the post-filtering process is set dependent on said portion.

## Description

### Technical Field of the Invention

The present invention relates to a method and a device for optimizing a post-filtering process for post-filtering a decoded image in a sequence of images.

### Description of Related Art

After decoding an encoded data stream, such as a stream of images for a video sequence, a decoder may perform a post-filtering process to enhance the image quality. The decoder processing unit may be implemented by a media processor, which performs various media processing functions. The processor may perform both the decoding and the post-filtering process. The processor power available to the post-filtering process may be dependent on the parallel activities in a media system and may change over time depending on the system load.

In a portable communication device, such as a mobile telephone, the processor power is limited. At the same time, different image decoding processes or data types may need to be supported. Examples of decoding processes are decoding encoded data stored or preloaded in the portable communication device, a received stream of encoded data, which is also known as streaming, or encoded data relating to a video telephony call. The various decoding processes may have different post-filtering requirements. If a single decoder is utilized for the various decoding processes or different data types, the post-filtering process provided must be suitable for each data type, such as stored data, streaming data, or video telephony data. This may result in that the ratio of utilization of the processing power may vary dependent of the data type being decoded. For example, if a too complex post-filtering process is chosen, the decoder may get delayed and the images are not post-filtered in time for their display, whereas if a too simple post-filtering process is chosen, the resulting quality will become poor, as will the ratio of utilization.

### Summary of the Invention

It is an object of the invention to optimize a post-filtering process for post-filtering a decoded image in a sequence of images.

According to a first aspect of the invention, a method for optimizing a post-filtering process for post-filtering a decoded image in a sequence of images comprises determining at least a portion of the difference between a time period available for processing an image and a time period used for processing said image; and setting a complexity level of the post-filtering process dependent on said portion.

The step of determining may comprise obtaining an acknowledgement that the processing of the image has ended; and determining, in response to said acknowledgement, the portion as the remaining time period between obtaining said acknowledgement and the latest point of time at which the image should have been processed. A time stamp associated with the image may be obtained, which is associated with the time of displaying the image.

A floating average may be determined based on a predetermined number of determined differences between time periods available for processing images and time periods used for processing the images.

The post-filtering process may be initiated by setting the complexity level to an initial complexity level before processing a first image in a sequence of images. The initial complexity level may be set in dependence of the type of decoding process or data type.

The complexity level may be set for a predetermined number of subsequent images following processing of a present image.

Processing of the image may comprise decoding and/or post-filtering the image.

According to another aspect of the invention, a device for optimizing a post-filtering process for post-filtering a decoded image of a sequence of images, comprises a timing unit. The timing unit is adapted to determine at least a portion of the difference between a time period available for processing an image and a time period used for processing said image and to set a complexity level of the post-filtering process dependent on said portion.

The timing unit may be adapted to: obtain an acknowledgement that the processing of the image has ended; and to determine, in response to obtaining said acknowledgement, the portion as the time period between obtaining said acknowledgement and the latest point of time at which the image should have been processed.

The device may also comprise a data unit, which is adapted to obtain a time stamp associated with the image. The time stamp may be associated with the time of displaying of the image.

The timing unit may also be adapted to generate a floating average based on a predetermined number of determined differences between time periods available for processing images and time periods used for processing the images. The floating average may be used for setting the complexity level.

The timing unit may be adapted to initiate the post-filtering process by setting the complexity level to an initial complexity level before a processing unit processes a first image in a sequence of images. The initial complexity level may be set in dependence of the type of decoding process being in operation or data type being processed.

The timing may be adapted to set the complexity level for a predetermined number of subsequent images following processing of a present image.

The device may comprise a processing device, which includes a decoding unit and/or a post-filtering unit for processing the image.

According to a third aspect of the invention, a computer program product comprises computer program code means for executing the method for optimizing a post-filtering process when the computer program code means are run by an electronic device having computer capabilities.

Further embodiments of the invention are defined in the dependent claims.

It is an advantage of the invention that the complexity level of a post-filtering process may be set adaptively, wherein the post-filtering process is optimized. Furthermore, as the criterion for setting the complexity level is simple, the processing power available may be utilized for the post-filtering process or other functions rather than for computationally expensive processes for setting the complexity level of the post-filtering unit.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features and advantages of embodiments of the invention will appear from the following detailed description of the invention, reference being made to the accompanying drawings, in which:
Fig. 1 is a block-diagram of one embodiment of the device according to the invention; and
Fig. 2 is a flow-chart of one embodiment of the method according to the invention.

### Detailed Description of Embodiments

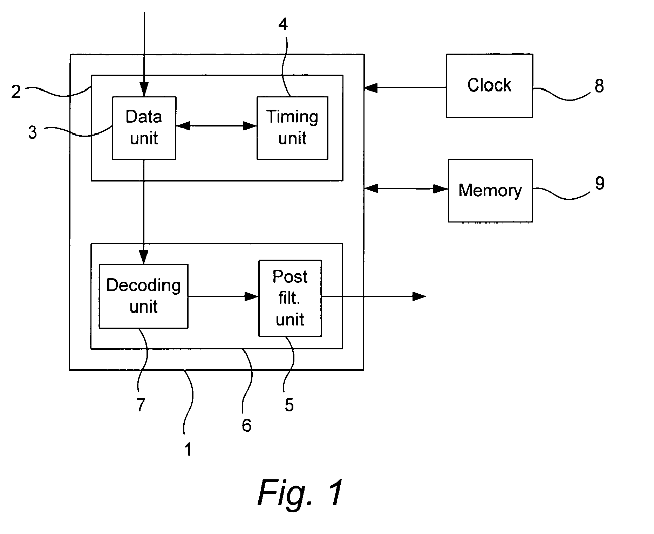

Fig. 1 illustrates a device 1 for decoding an encoded stream of data such as a plurality of images in a video sequence. The device 1 comprises a controller unit 2 having an input terminal for receiving input data. The controller unit 2 may comprise a data unit 3, which is connected to the input terminal. The data unit 3 receives the input data and may perform data buffering and preprocessing operations. The controller unit 2 may also comprise a timing unit 4, which may perform timing operations for outputting processed data and selecting the complexity level of a post-filtering unit 5. An output terminal of the data unit 3 is connected to a processing unit 6. The processing unit 6 may comprise a decoding unit 7, which may include various functional blocks for performing decoding processes, such as a variable length decoder, inverse quantization, an inverse transform, motion compensation and/or an adder process. The processing unit 6 may also include the post-filtering unit 5, which is connected to the output terminal of the decoding unit 7. The post-filtering unit 5, may perform various post-filtering processes to enhance the quality of the decoded image, such as gamma-correction, edge-sharpening, noise-removal, deblocking-filtering, and/or deringing operations. Furthermore, a system clock 8 and a memory 9 may be connected to the device 1.

The device 1 may be arranged to adaptively set a complexity level of a post-filtering process of the post-filtering unit. In operation, the processing unit 6 has a certain time period available for performing the decoding process of each image, including post-filtering, until a certain image should be ready for displaying. Thus, in response to decoding a first image, the timing unit 4 may determine at least a portion of a difference between the time period available for processing an image and a time period being used for processing the image. The entire time period available for processing the image may not have been used for processing. This may e.g. occur if any decoding process of the decoding unit 7 or any post-filtering process of the post-filtering unit 5 takes less time than assigned or available. To utilize the processing power efficiently and also achieve high perceptual quality, the timing unit 4 may be adapted to set a complexity level of the post-filtering process, which is dependent of or based on said portion of the difference. Setting the complexity level may be based on the entire difference or a portion thereof. A first complexity level may be used for post-filtering a first image. If the additional time, which is required for using a more complex post-filtering process than the first complexity level, is less than the difference, the timing unit 4 may instruct the post-filtering unit 5 to apply a more complex post-filtering process during post-filtering of a second image, which may require an additional time period of at least a portion of the difference between the time period used for processing a first image and the time period being used for processing the first time period. Then, the new complexity level may be used for processing a second image.

In this context it is assumed that the complexity level of the post-filtering process is associated with or related to the time required for performing a post-filtering process. Alternatively or additionally, the complexity level may be associated with the required processing power for performing the post-filtering process. Thus, a post-filtering process having a higher complexity level may require more time/processing power than a post-filtering process having a lower complexity level, or vice versa. The complexity level of the post-filtering may depend on the specific post-filtering functions carried out in a certain post-filtering process. Alternatively or additionally, each post-filtering function may include one or several complexity levels. Each complexity level may require a different processing time or have a different processing power requirement to be carried out. Before a new complexity level is set, the timing unit 4 may check that the processing power required to carry out the post-filtering process is available.

Setting the complexity level to be applied by the post-filtering unit 5 in dependence of at least a portion of the difference between the the available time period and the used time period for processing an image has the advantage that the most complex post-filtering process possible may be utilized, wherein the perceptual quality and the quality of the decoded image may be enhanced compared to applying a fixed complexity level. Furthermore, as the criterion for selecting the complexity level is simple, it requires relatively little processing power, wherein the available processing power may be utilized for post-filtering processing or other functions rather than processing complicated criteria for selecting the complexity level.

The device 1 may comprise various types of memories, which is shown collectively as memory 9. The memory 9 may e.g. comprise a flash-memory, a non-volatile memory a ROM (Read Only Memory) and/or RAM (Random Access Memory). The memory 9 may comprise computer readable instructions for carrying out the method according to the invention.

Furthermore, the memory 9 may comprise one or several tables in which complexity levels are tabulated with associated time periods. Each time period stored in the memory 9 is associated with a complexity level that may be used if the portion of the difference corresponds to the stored time period. Alternatively ranges of time periods may be stored in the memory 9, each range being associated with a certain complexity level. For example, a range of 10-15ms may specify that complexity level 3 should be set. Thus, if the portion of the difference is 13ms, the timing unit 4 may instruct the post-filtering unit to set complexity level 3.

Additionally or alternatively, a separate table may be provided for each decoding process or data type for which the device 1 is adapted. Thus, a first table may be used if a stream of encoded data is received as input data, a second table may be used if stored or preloaded data is received as input data, and/or a third table may be used if encoded data relating to a video telephone call is received as input data. Each stored complexity level may also be associated with a required available processing power value, such as complexity level 3 may require 5% of the total processing power.

The specific settings of the post-filtering unit 5 for each complexity level may be stored in the memory 9 or in a separate memory of the post-filtering unit 5.

The data of each image may be associated with a time stamp, which is received together with the data of the image. The time stamp may give a time at which the image should be displayed relative a start time or display time of a first image of a plurality of images. The time stamp may be derived by a pre-processing operation performed by the data unit 3. The system clock 8 may be connected to the device 1. Thus, the start time for displaying a first image of a sequence of images may be determined by the timing unit 4. Then, the display time of each image in a sequence of images may be determined by means of the time stamp and the start time of the sequence.

The timing unit 4 may instruct the data unit 3 to forward the data of an image to the processing unit 6. Also, the timing unit 4 may register the start time of the processing of the image, e.g. a certain clock cycle in which the data unit 3 is instructed to forward the data of the image. As the timing unit 4 has obtained the time stamp associated with the image, it knows when the image should be ready for displaying or for any other processing after post-filtering. Thus, the timing unit 4 may also determine the time period being available for decoding the image and possible further processing, such as post-filtering.

When the processing unit 6 has processed an image, or when it has determined a point of time when an image will be processed, it may issue an acknowledgement that the processing, which may include decoding and/or post-filtering, of the image has ended. The acknowledgement may be received by the timing unit 4. Then, the timing unit 4 may determine, in response to the acknowledgement, the difference of the available time period and the used time period for processing the image as the time period between obtaining said acknowledgement until the latest point of time the image should be processed. Utilizing the time stamp for determining the difference has the advantage that a simple implementation may be obtained, as the time stamp is already known and because the system must know when each image should have been processed, e.g. to be ready for displaying.

In one embodiment, the timing unit 4 is adapted to generate an average value, such as a floating average, based on the latest determined and a predetermined number of previously determined differences between time periods available for processing images and time periods used for processing images. Thus, the system becomes less sensitive to temporary deviation of required time for performing the processing between subsequent images.

In one embodiment, the post-filtering unit 5 may always have a certain complexity level, such as the least complex complexity level, at start-up of the device 1. Then, the complexity level may successively be adjusted to the correct one under the present circumstances.

In another embodiment, the complexity level of the post-filtering unit 5 is set before the first image of a sequence of images is post-filtered. The timing unit 4 may be arranged to initiate the post-filtering unit 5 by setting its complexity level to an initial complexity level at the beginning of a processing session, i.e. before post-filtering a first image of a sequence of images. The complexity level may be initiated e.g. dependent on the type of decoding process being in operation. Setting the complexity level may also be dependent on the data type to process, such as any type of stored data, streaming data, or video telephony data. Initiating the post-filtering unit 5 to an initial complexity level has the advantage that the quality of the decoded images is high from the beginning of the decoding process.

In still another embodiment of the invention, the complexity level of the post-filtering unit 5 is fixed for a predetermined number of subsequent images following the image for which the difference has been determined. Thus, less changes of the complexity level has to be made.

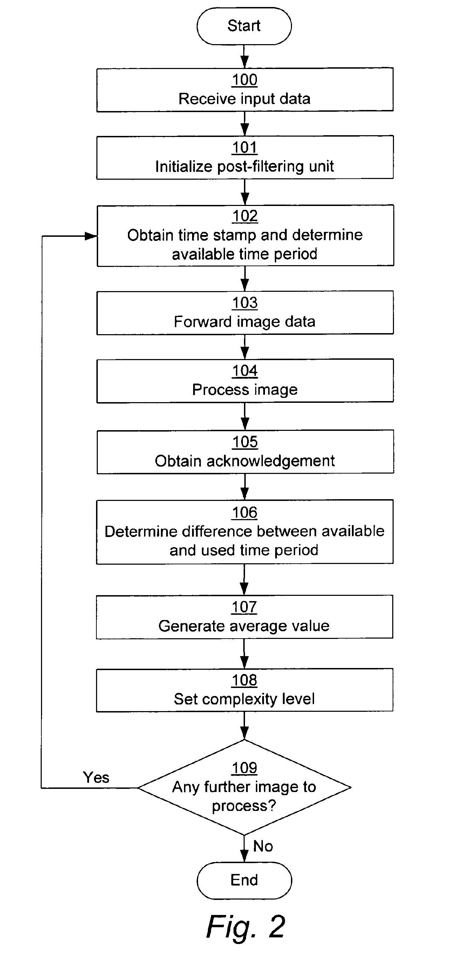

Fig. 2 illustrates one embodiment of a method for adaptively setting the complexity level of the post-filtering unit 5. In a first step 100, input data is received. The data may be received from a memory, which may be an external, or an internal memory. The input data may also be downloaded from a network, such as a mobile telecommunication network, a wide area network or a local area network. In step 101, the post-filtering unit 5 is initialized by setting its complexity level before a first image is post-filtered. In step 102, the time stamp associated with the image to be processed and the available time period for processing the image are obtained. In step 103, the data of the image to be processed is forwarded to the processing unit 6, which may decode and post-filter the image in step 104. In step 105, the acknowledgment that the processing unit has finalized the processing, such as a decoding process and a post-filtering process, is obtained. Then, the portion of the difference between the time period available for processing the image and the time period used for processing the image may be determined in step 106. If the complexity level should be set dependent on an average value of a predetermined number of determined differences of available and used time periods, the average value may be generated in step 107. Then, the complexity level to be set may be obtained from the memory 9. The complexity level of the post-filtering unit 5 may be set in step 108. In step 109 it is determined whether any further image to process exists. If the answer is yes, the procedure returns to step 102. If the answer in step 109 is no, the procedure ends.

The method according to Fig. 2 does not need to include all the steps described, such as generating the floating average in step 107 and initializing the post-filtering unit 5.

The steps may also be performed in a different order. For example, the timing unit 4 may know when the processing of the image is finalized before the processes included in the processing are actually finalized and determine the difference before acknowledgement in step 105.

The time period available for processing the image may also be preset, wherein the complexity level may be set once the available time period is known.

Furthermore, in one embodiment the complexity level is associated with the type of data to be processed. Depending on the type of data, only a subset of the available complexity levels may be utilized. Thus, a plurality of subsets of complexity levels may be provided, wherein each subset may be used together with one or several data types.

The device 1 may be implemented in hardware and/or software by a processor, such as a CPU (Central Processing Unit) running computer program code means to carry out functions and steps as described above. Alternatively, the device is implemented as an ASIC (Application Specific Integrated Circuit) or a FPGA (Field Programmable Gate Array).

The device 1 may be used in any electronic device being adapted for processing images, such as a portable or handheld mobile radio communication equipment, a mobile radio terminal, a mobile telephone, a pager, a communicator, an electronic organizer, a smartphone and a computer.

Embodiments of the invention may be embedded in a computer program product, which enables implementation of the method and functions described herein. Furthermore, embodiments of the invention may be carried out when the computer program product is loaded and run in a system having computer capabilities. Computer program, software program, program product, or software, in the present context mean any expression, in any programming language, code or notation, of a set of instructions intended to cause a system having a processing capability to perform a particular function directly or after conversion to another language, code or notation.

The present invention has been described above with reference to various embodiments. However, other embodiments than the above described are possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A method for optimizing a post-filtering process for post-filtering a decoded image in a sequence of images, comprising:
determining at least a portion of the difference between a time period available for processing an image and a time period used for processing said image; and
setting a complexity level of the post-filtering process dependent on said portion.

2. The method according to claim 1, wherein the step of determining comprises:
obtaining an acknowledgement that the processing of the image has ended; and
determining, in response to said acknowledgement, the portion as the remaining time period between obtaining said acknowledgement and the latest point of time at which the image should have been processed.

3. The method according to claim 1 or 2, wherein the step of determining comprises obtaining a time stamp associated with the image, said time stamp being associated with the time of displaying the image.

4. The method according to any of the previous claims, wherein the step of determining comprises generating a floating average based on a predetermined number of determined differences between time periods available for processing images and time periods used for processing the images.

5. The method according to any of the previous claims, comprising initiating the post-filtering process by setting the complexity level to an initial complexity level before processing a first image in a sequence of images.

6. The method according to claim 5, comprising setting the initial complexity level in dependence of the type of decoding process being in operation or data type being processed.

7. The method according to any of the previous claims, wherein the step of setting comprises setting the complexity level for a predetermined number of subsequent images following processing of a present image.

8. The method according to any of the previous claims, wherein said processing of the image comprises decoding and/or post-filtering the image.

9. A device for optimizing a post-filtering process for post-filtering a decoded image of a sequence of images, comprising:
a timing unit (4) adapted to determine at least a portion of the difference between a time period available for processing an image and a time period used for processing said image and to set a complexity level of the post-filtering process dependent on said portion.

10. The device according to claim 9, wherein the timing unit (4) is adapted to:
obtain an acknowledgement that the processing of the image has ended; and
determine, in response to obtaining said acknowledgement, the portion as the time period between obtaining said acknowledgement and the latest point of time at which the image should have been processed.

11. The device according to claim 9 or 10, comprising a data unit (3) adapted to obtain a time stamp associated with the image, said time stamp being associated with the time of displaying of the image.

12. The device according to any of claims 9 to 11, wherein the timing unit (4) is adapted to generate a floating average based on a predetermined number of determined differences between time periods available for processing images and time periods used for processing the images and use said floating average for setting the complexity level.

13. The device according to any of claims 9 to 12, wherein the timing unit (4) is adapted to initiate the post-filtering process by setting the complexity level to an initial complexity level before a processing unit (6) processes a first image of a sequence of images.

14. The device according to claim 13, wherein the timing unit (4) is adapted to set the initial complexity level in dependence of the type of decoding process being in operation or data type being processed.

15. The device according to any of claims 9 to 14, wherein the timing unit (4) is adapted to set the complexity level for a predetermined number of subsequent images following processing of a present image.

16. The device according to any of claims 9 to 15, comprising a processing device including a decoding unit (7) and/or a post-filtering unit (5) for processing the image.

17. A computer program product comprising computer program code means for executing the method according to any of claims 1 to 8, when said computer program code means are run by an electronic device having computer capabilities.
